**Europäisches Patentamt**

**European Patent Office**

**Office européen des brevets**

(19)

(11) Veröffentlichungsnummer: **0 630 919 A1**

## (12) EUROPÄISCHE PATENTANMELDUNG

(21) Anmeldenummer: **94107458.5**

(22) Anmeldetag: **13.05.94**

(51) Int. Cl.5: **C08F 220/12**, C08F 246/00, C04B 24/26

(30) Priorität: **21.05.93 DE 4317035**

(43) Veröffentlichungstag der Anmeldung: **28.12.94 Patentblatt 94/52**

(84) Benannte Vertragsstaaten:
**AT BE CH DE DK ES FR GB IT LI NL SE**

(71) Anmelder: **BASF Aktiengesellschaft**
**Carl-Bosch-Strasse 38**
**D-67063 Ludwigshafen (DE)**

(72) Erfinder: **Beckerle, Wilhelm Friedrich**
**Beethovenstrasse 20 1/2**
**D-67240 Bobenheim-Roxheim (DE)**
Erfinder: **Petri, Rolf**
**Pierstrasse 10b**
**D-67227 Frankenthal (DE)**
Erfinder: **Dotzauer, Bernhard, Dr.**
**Woehlerstrasse 12f**
**D-67133 Maxdorf (DE)**
Erfinder: **Schwartz, Manfred, Dr.**
**Friesenstrasse 24**
**D-67063 Ludwigshafen (DE)**
Erfinder: **Angel, Maximilian, Dr.**
**Bayernstrasse 12**
**D-67105 Schifferstadt (DE)**

(54) **Wässrige Polymerisatdispersionen.**

(57) Wäßrige Polymerisatdispersionen von Polymerisaten, die eine erhöhte Glasübergangstemperatur und ein niederes mittleres Molekulargewicht aufweisen sowie eine spezifische Menge Methacrylsäure einpolymerisiert enthalten. Diese wäßrigen Polymerisatdispersionen eignen sich in flüssiger oder trockener Form als das Fließverhalten verbessernder Zusatz in Zement enthaltenden mineralischen Bindebaustoffen.

EP 0 630 919 A1

Die vorliegende Erfindung betrifft wäßrige Polymerisatdispersionen, die dadurch erhältlich sind, daß man ein Monomerengemisch der Zusammensetzung

70 bis 85 Gew.-% wenigstens eines Monomeren aus der Gruppe umfassend Styrol, Vinyltoluole, Nitrile von 3 bis 6 C-Atome aufweisenden $\alpha,\beta$-monoethylenisch ungesättigten Carbonsäuren und Ester aus 3 bis 6 C-Atome aufweisenden $\alpha,\beta$-monoethylenisch ungesättigten Carbonsäuren und 1 bis 12 C-Atome aufweisenden Alkanolen (Monomere a),

15 bis 25 Gew.-% wenigstens einer 3 bis 6 C-Atome aufweisenden $\alpha,\beta$-monoethylenisch ungesättigten Carbonsäure und/oder deren Amiden (Monomere b) und

0 bis 5 Gew.-% sonstige copolymerisierbare Monomere (Monomere c)

nach der Methode der radikalischen wäßrigen EmulsionsPolymerisation mit der Maßgabe Polymerisiert, daß

- die Monomeren b, bezogen auf ihre Gesamtmenge, wenigstens 50 Gew.-% Methacrylsäure umfassen,
- die Zusammensetzung der insgesamt eingesetzten Monomeren a, b und c so gewählt wird, daß nach der Beziehung von Fox für ein aus diesen Monomeren aufgebautes Emulsionspolymerisat eine Glasübergangstemperatur von 80 bis 160 °C resultiert und
- der K-Wert des resultierenden Emulsionspolymerisats, bestimmt in seiner vollsauren Form in Dimethylformamid bei 23 °C und einem Emulsionspolymerisatgehalt von 0,1 Gew.-%, 15 bis 40 beträgt.

Ferner betrifft die vorliegende Erfindung Verfahren zur Herstellung dieser wäßrigen Polymerisatdispersionen sowie deren Verwendung, in wäßriger oder getrockneter Form, als Zusatzmittel in Zement enthaltenden mineralischen Bindebaustoffen.

Als mineralische Bindebaustoffe werden Zubereitungen zusammengefaßt, die als wesentliche Bestandteile mineralische Bindemittel wie Zement, Kalk oder Gips sowie als Zuschläge dienende Sande, Kiese, gebrochene Gesteine oder sonstige Füllstoffe wie z.B. auch natürliche oder synthetische Fasern enthalten und die nach dem Anmachen mit Wasser an der Luft, teilweise auch unter Wasser, erstarren und erhärten (verfestigen).

In vielen Fällen ist es nun erwünscht, daß der gebrauchsfertig angemachte mineralische Bindebaustoff einerseits ein vorteilhaftes Fließverhalten, d.h. eine möglichst niedrige Fließgrenze (als Fließgrenze wird diejenige Schubspannung bezeichnet, oberhalb derer sich ein Werkstoff wie eine Flüssigkeit verhält, d.h. fließt, während er sich bei Einwirkung von unterhalb der Fließgrenze liegenden Schubspannungen wie ein Feststoff verhält, d.h. nicht fließt) und unter Einwirkung von Schubspannungen oberhalb der Fließgrenze einen möglichst geringen Fließwiderstand, eine möglichst geringe dynamische Viskosität, aufweist, seine Verfestigung andererseits jedoch gleichzeitig ohne Separieren der Zuschläge erfolgt, so daß der verfestigte mineralische Bindebaustoff einen möglichst homogenen Aufbau hat.

Beispiele für ein derartiges Anforderungsprofil sind selbstverlaufende Ausgleichsmassen auf der Basis mineralischer Bindemittel (sie werden auf Unebenheiten aufweisende Untergrunde aufgebracht um eine glatte Oberfläche zu erhalten und sollen unter der Einwirkung der insbesondere durch die Unebenheiten des Untergrundes verursachten Schubspannungen wie eine Flüssigkeit verlaufen, so daß sich von selbst ein gleichmäßiges Niveau einstellt) oder Mörtel, die, aus Gründen der Zweckmäßigkeit, pumpfähig sein sollen.

Es ist nun allgemein bekannt, die Eigenschaften mineralischer Bindebaustoffe durch Zusatz wäßriger Polymerisatdispersionen (in wäßriger oder getrockneter Form) zu modifizieren. In der Regel geht damit jedoch eine Verlängerung der Zeit einher, die erforderlich ist, bis der mineralische Bindebaustoff seine gebrauchsfähige Festigkeit (bei Ausgleichsmassen z.B. die Zeit, die vergeht, bis die aufgebrachte Ausgleichsmasse ohne Beschädigung begehbar ist) erreicht.

Die Aufgabe der vorliegenden Erfindung bestand daher darin, wäßrige Polymerisatdispersionen zur Verfügung zu stellen, die bei Zusatz (in wäßriger oder getrockneter Form) zu Zement enthaltenden mineralischen Bindebaustoffen im frisch angemachten Zustand ein vorteilhaftes Fließverhalten derselben bedingen, ohne die Verfestigungsdauer bis zur gebrauchsfähigen Festigkeit wesentlich zu beeinflußen und ohne die Eigenschaften im verfestigten Zustand, wie mechanische Festigkeit, Haftung auf dem Untergrund, Oberflächenbeschaffenheit, Wasserfestigkeit etc., wesentlich zu mindern.

Demgemäß wurden die eingangs erwähnten wäßrigen Polymerisatdispersionen gefunden.

Der K-Wert ist eine relative Viskositätszahl, die in Analogie zur DIN 53 726 bestimmt wird. Er beinhaltet die Fließgeschwindigkeit von reinem Dimethylformamid (DMF) relativ zur Fließgeschwindigkeit von 0,1 Gew.-% Polymerisat enthaltendem DMF (bezogen auf das Gesamtgewicht) und charakterisiert das mittlere Molekulargewicht des Polymerisats (vgl. dazu Cellulosechemie, Vol. 13 (1932), S. 58-64, und Kirk-Othmer, Encyclopedia of Chemical Technology, Vol. 23, S. 967-968). Ein hoher K-Wert entspricht dabei einem hohen mittleren Molekulargewicht. Die erfindungsgemäßen Emulsionspolymerisate weisen in vollsaurer Form vorzugsweise einen K-Wert von 20 bis 35 und besonders bevorzugt von 20 bis 30 auf.

Nach Fox (T.G. Fox, Bull. Am. Phys. Soc. (Ser. II) 1, 123 (1956)) gilt für die Glasübergangstemperatur von Mischpolymerisaten in guter Näherung

$$\frac{1}{Tg} \quad = \quad \frac{X^1}{Tg^1} \quad + \quad \frac{X^2}{Tg^2} \quad + \quad \cdots \cdots \quad \frac{X^n}{Tg^n} \quad ,$$

wobei $X^1$, $X^2$, ..., $X^n$ die Massenbrüche der Monomeren 1, 2, ..., n und $Tg^1$, $Tg^2$, ..., $Tg^n$ die Glasübergangstemperaturen der jeweils nur aus einem der Monomeren 1, 2, ... oder n aufgebauten Polymerisate in Grad Kelvin bedeuten.

Die Glasübergangstemperaturen dieser Homopolymerisate der Monomeren a, b, c sind bekannt und z.B. in J. Brandrup, E.H. Immergut, Polymer Handbook 1st Ed. J. Wiley, New York 1966 und 2nd Ed. J. Wiley, New York 1975, aufgeführt. Insbesondere sind die Glasübergangstemperaturen der Homopolymerisate der Monomeren a und b aus Ullmann's Encyclopedia of Industrial Chemistry, Verlag Chemie, Weinheim (1992), Vol. A21, Tab. 8, S. 169, zu entnehmen. Vorzugsweise errechnet sich nach Fox für die erfindungsgemäß zu polymerisierenden Monomerengemische eine Glasübergangstemperatur von 90 bis 130°C.

Aus J. Appl. Polymer Science, Vol. 11 (1970), S. 897-909 und S. 911-928, sind wäßrige Polymerisatdispersionen bekannt, die durch radikalische Emulsionspolymerisation von Monomergemischen bestehend aus 80 Gew.-% Methylmethacrylat und 20 Gew.-% Methacrylsäure erhalten worden sind. Da eine Mitverwendung von das Molekulargewicht regelnden Substanzen nicht erwähnt wird, liegt der K-Wert dieser Emulsionspolymerisate in notwendiger Weise oberhalb von 40.

Aus Makrom. Chem. Suppl. 10/11, S. 335-357 (1985), und ACS Symposium Series, American Chemical Society, Bd. 165, Emulsion Polymers and Emulsion Polymerization, S. 290-313 (1981), sind wäßrige Polymerisatdispersionen bekannt, die ebenfalls durch radikalische Emulsionspolymerisation von Monomerengemischen bestehend aus 80 Gew.-% Methylmethacrylat und 20 Gew.-% Methacrylsäure erhalten worden sind. Allerdings erfolgte hier die Polymerisation in Gegenwart von Molekulargewichtsreglern (n-Dodecylmercaptan), deren Menge jedoch lediglich 0,02 bis 0,08 Gew.-%, bezogen auf die zu polymerisierenden Monomeren, betrug. Der K-Wert dieser Emulsionspolymerisate liegt daher ebenfalls oberhalb von 40.

In den Schriften DE-AS 15 69 903, BE-A 8 454 499, JP-A 54/43285, US-A 4 225 496, DE-A 32 20 384, DE-A 28 37 898, US-A 3 232 899 und JP-A 91/131 533 werden wäßrige Polymerisatdispersionen von $\alpha,\beta$-monoethylenisch ungesättigte Carbonsäuren einpolymerisiert enthaltenden Emulsionspolymerisaten als Additive in Zement enthaltenden mineralischen Bindebaustoffen empfohlen. Diese Emulsionspolymerisate vermögen jedoch aufgrund ihres zu hoch liegenden mittleren Molekulargewichts und/oder ihrer zu tief liegenden Glasübergangstemperatur und/oder ihres zu hoch bzw. zu tief liegenden Anteils an einpolymerisierten $\alpha,\beta$-monoethylenisch ungesättigten Carbonsäuren die dieser Erfindung zugrunde liegende Aufgabe nicht in voll befriedigender Weise zu lösen.

Die EP-A 537 411 empfiehlt die generelle Verwendung von Polymerisatdispersionen von Polymerisaten, die eine erhöhte Tg aufweisen als Additiv in Zementmörtel. Zur Lösung der dieser Erfindung zugrunde liegenden Aufgabe ist die Eigenschaft einer erhöhten Glasübergangstemperatur des dispergierten Polymerisats jedoch nicht ausreichend.

Die DE-A 39 07 013 betrifft wäßrige Polymerisatdispersionen, deren Emulsionspolymerisate aus 60 bis 95 Gew.-% Methylmethacrylat (Monomeres I), 5 bis 40 Gew.-% Acryl- und/oder Methacrylsäure (Monomere II) und gegebenenfalls sonstigen Comonomeren mit der Maßgabe aufgebaut sind, daß ihre Glasübergangstemperatur 60 bis 125°C beträgt. Diese wäßrigen Polymerisatdispersionen werden als Bindemittel für Formkörper empfohlen. Als zahlenmittleres Molekulargewicht der Emulsionspolymerisate ist der Bereich $5 \cdot 10^3$ bis $5 \cdot 10^6$, bevorzugt $2 \cdot 10^5$ bis $2 \cdot 10^6$ angegeben, und die bevorzugte Monomerenzusammensetzung lautet 60 bis 75 Gew.-% Methylmethacrylat, 5 bis 30 Gew.-% Methacrylsäure und 0 bis 10 Gew.-% Acrylsäure.

Die EP-A 262 326 und die EP-A 332 067 betreffen Verfahren zur Herstellung eines redispergierbaren Polymerisatpulvers durch Eintrocknen einer Polymerisatdispersion, enthaltend ein dispergiertes Polymerisat mit einer dynamischen Einfriertemperatur $T_{\lambda max}$ von 60 bis 150°C, das aus 20 bis 60 Gew.-% Acryl- und/oder Methacrylsäure und 40 bis 80 Gew.-% niederer Alkylester der Acryl- und/oder Methacrylsäure oder deren Gemisch mit Styrol sowie gegebenenfalls weiteren Comonomeren aufgebaut ist, nach speziellen Sprühtrocknungsverfahren. Sie empfehlen, die redispergierten Polymerisatpulver zur Herstellung von Arzneimittelüberzügen zu verwenden.

Erfindungsgemäß werden als Monomere a vorzugsweise Monomerengemische eingesetzt, die zu wenigstens 50, vorzugsweise zu wenigstens 75 Gew.-% Methylmethacrylat umfassen. Unter diesen sind Gemische aus Styrol und Methylmethacrylat bevorzugt. Mit besonderem Vorteil umfaßt die Gesamtmenge

EP 0 630 919 A1

der Monomeren a ausschließlich Methylmethacrylat.

Als Monomere b eignen sich mit Vorteil solche Gemische, die zu wenigstens 75 Gew.-% Methacrylsäure enthalten. Generell werden als Monomere b Gemische aus Methacrylsäure und Acrylsäure gegenüber anderen Monomergemischen b bevorzugt. Besonders bevorzugt wird als Monomeres b ausschließlich Methacrylsäure verwendet.

Besonders geeignete Momonere c sind solche mit einer polaren Struktur, z.B. Acrylamidopropansulfonsäure, Vinylpyrrolidon, Hydroxyethylacrylat oder quaternäres Vinylimidazol. Vorzugsweise werden keine Monomeren c miteinpolymerisiert.

Mit besonderem Vorteil weist daher das erfindungsgemäß zu polymerisierende Monomergemisch folgende Zusammensetzung auf:

75 bis 85 Gew.-% Methylmethacrylat und

15 bis 25 Gew.-% Methacrylsäure.

Die Herstellung der erfindungsgemäßen wäßrigen Polymerisatdispersionen erfolgt in an sich bekannter Weise nach dem Verfahren der radikalischen wäßrigen Emulsionspolymerisation, d.h. in der Regel in Gegenwart von Dispergiermitteln und radikalischen Polymerisationsinitiatoren, wobei die Polymerisationsbedingungen in dem Fachmann an sich bekannter Weise so gewählt werden, daß das resultierende mittlere Molekulargewicht, d.h. der K-Wert, im erfindungsgemäßen Bereich liegt. Im allgemeinen arbeitet man bei Temperaturen zwischen Raumtemperatur und $100\,^{\circ}$C, vorzugsweise bei Temperaturen von 60 bis $90\,^{\circ}$C.

Als radikalische Polymerisationsinitiatoren kommen alle diejenigen in Betracht, die in der Lage sind, im genannten Temperaturbereich eine radikalische wäßrige Emulsionspolymerisation auszulösen. Es kann sich dabei sowohl um Peroxide, z.B. Alkalimetallperoxidisulfate (insbesondere Natriumperoxidisulfat) als auch um Azoverbindungen handeln.

Als Dispergiermittel kommen sowohl die zur Durchführung von radikalischen wäßrigen Emulsionspolymerisationen üblicherweise eingesetzten Schutzkolloide als auch Emulgatoren in Betracht. Geeignete Schutzkolloide sind beispielsweise Polyvinylalkohole, Cellulosederivate oder Vinylpyrrolidon enthaltende Copolymerisate. Bevorzugt sind solche erfindungsgemäßen wäßrigen Polymerisatdispersionen, zu deren Herstellung keine Schutzkolloide mitverwendet worden sind. Vorzugsweise werden als Dispergiermittel ausschließlich Emulgatoren eingesetzt, deren relative Molekulargewichte im Unterschied zu den Schutzkolloiden üblicherweise unter 1.000 liegen. Sie sind vorzugsweise anionischer und/oder nichtionischer Natur. Gebräuchliche Emulgatoren sind z.B. ethoxylierte Mono-, Di- und Tri-Alkylphenole (EO-Grad: 3 bis 50, Alkylrest: $C_4$ bis $C_9$), ethoxylierte Fettalkohole (EO-Grad: 0 bis 50, Alkylrest: $C_8$ bis $C_{36}$) sowie Alkali- und Ammoniumsalze von Alkylsulfaten (Alkylrest: $C_8$ bis $C_{12}$), von Schwefelsäurehalbestern ethoxylierter Alkylphenole (EO-Grad: 3 bis 50, Alkylrest: $C_4$ bis $C_{15}$) und, besonders bevorzugt, ethoxylierter Alkanole (EO-Grad: 0 bis 30, Alkylrest: $C_{10}$ bis $C_{18}$).

Die Einstellung des angestrebten mittleren Molekulargewichtes erfolgt zweckmäßigerweise dadurch, daß die Polymerisation in Anwesenheit von das Molekulargewicht regelnden Substanzen durchgeführt wird.

Als solche eignen sich insbesondere Schwefelwasserstoffverbindungen wie Akylmercaptane, z.B. tert.-Dodecylmercaptan, Thioglykolsäure und deren Ester, Mercaptoalkanole wie Mercaptoethanol, sowie Allylsulfid. Als besonders vorteilhaft erweist sich die Verwendung von Mercaptoethanol oder Estern der Thioglykolsäure. Mit ganz besonderem Vorteil wird der Ester aus Thioglykolsäure und 2-Ethylhexanol eingesetzt. Die erforderliche Menge dieser Molekulargewichtsregler liegt im Normalfall im Bereich von 0,1 bis 4 Gew.-%, bezogen auf die zu polymerisierenden Monomeren. In der Regel werden jedoch 0,5 bis 3 bzw. 1 bis 2,5 Gew.-% an Molekulargewichtsregler benötigt. Die Menge der erforderlichen Polymerisationsinitiatoren liegt üblicherweise, in gleicher Weise bezogen, im Bereich von 0,5 bis 2 Gew.-% und die in gleicher Weise bezogene erforderliche Dispergiermittelmenge beträgt üblicherweise 0,5 bis 3 Gew.-%.

Ferner können im Rahmen der Durchführung der radikalischen wäßrigen Emulsionspolymerisation zur pH-Wert-Regulierung in geringen Mengen Verbindungen wie das Mohrsche Salz $((NH_4)_2Fe(SO_4)_2 \bullet 6H_2O)$ zugesetzt werden. Der pH-Wert des Polymerisationsmediums liegt während der Polymerisation im allgemeinen bei pH 1 bis 5.

Vorzugsweise erfolgt die Emulsionspolymerisation so, daß man einen Teil der Dispergiermittel (bis zu 10 Gew.-% bezogen auf deren eingesetzte Gesamtmenge) und einen Teil des Polymerisationsinitiators (bis zu 20 Gew.-% bezogen auf die erforderliche Gesamtmenge) in wäßriger Phase vorlegt, die Vorlage auf die Polymerisationstemperatur erhitzt und anschließend unter Aufrechterhaltung der Polymerisationstemperatur die zu polymerisierenden Monomeren, in wäßriger Phase voremulgiert, sowie dazu synchron eine wäßrige Lösung der Restmenge an Polymerisationsinitiator dem Polymerisationsgefäß kontinuierlich zuführt (in der Regel innerhalb weniger Stunden). Die das Molekulargewicht regelnde Substanz wird zweckmäßigerweise als Bestandteil der zuzuführenden wäßrigen Monomerenemulsion zugesetzt (bei großtechnischer Herstellung erweist es sich als vorteilhaft, einen kleinen Teil der Monomeren/Regler-Emulsion vorab ins Polymeri-

4

sationsgefäß vorzulegen).

Nach Abschluß der Monomeren- und Initiatorzufuhr wird normalerweise unter Aufrechterhaltung der Polymerisationstemperatur noch eine bis zwei Stunden nachpolymerisiert. Einer durch die Mitverwendung von molekulargewichtsregelnd wirkenden Mercaptoverbindungen auftretenden Geruchswirkung der erfindungsgemäßen wäßrigen Polymerisatdispersionen kann in an sich bekannter Weise dadurch begegnet werden, daß man nach Beendigung der radikalischen wäßrigen Emulsionspolymerisation (der Polymerisationsumsatz liegt zweckmäßigerweise oberhalb von 99 Gew.-%) wirksame Mengen an Peroxiden, wie insbesondere Wasserstoffperoxid oder Alkalimetallperoxidisulfat, zusetzt. Als besonders vorteilhaft erweist sich in dieser Hinsicht der Zusatz bei erhöhter Temperatur.

Der Feststoffgehalt der erfindungsgemäßen wäßrigen Polymerisatdispersion beträgt normalerweise 10 bis 50, vorzugsweise 20 bis 40 Gew.-%. Es hat sich als vorteilhaft erwiesen, wenn der zahlenmittlere Durchmesser der dispergierten Polymerpartikel 60 bis 120 nm beträgt. Dies läßt sich durch geeignete Wahl der zur Polymerisation verwendeten Menge an Dispergiermittel in an sich bekannter Weise realisieren.

Die erfindungsgemäßen wäßrigen Polymerisatdispersionen eignen sich insbesondere als Additiv in Zement enthaltenden mineralischen Bindebaustoffen, da sie diesen nach dem Anmachen mit Wasser ein vorteilhaftes Fließverhalten verleihen. Vorzugsweise umfaßt das den mineralischen Bindebaustoffen zugrunde liegende mineralische Bindemittel wenigstens 50 % seines Gewichtes an Zement. In besonders vorteilhafter Weise tritt die erfindungsgemäße Wirkung bei Verwendung von mineralischen Bindemitteln aus 70 bis 100 Gew.-% Zement und

0 bis 30 Gew.-% Gips

ein. Als ganz besonders vorteilhaft erweist sich die erfindungsgemäße Anwendung in mineralischen Bindebaustoffen, denen als mineralischer Binder ausschließlich Zement zugrunde liegt. Die erfindungsgemäße Wirkung ist von der Zementart weitgehend unabhängig. Je nach Vorhaben können beispielsweise Hochofenzement, Ölschieferzement, Portlandzement, hydrophobierter Portlandzement, Schnellzement, Quellzement oder Tonerdeschmelzzement verwendet werden, wobei sich die Verwendung von Portlandzement als besonders günstig erweist.

Die übliche Verkaufsform mineralischer Bindebaustoffe ist deren Trockengemisch, das traditionell das mineralische Bindemittel sowie die Zuschläge umfaßt.

In diesem Zusammenhang ist es von Vorteil, daß die erfindungsgemäßen wäßrigen Polymerisatdispersionen in besonders einfacher Weise zu, vor allem in wäßrigem alkalischem Medium, redispergierbaren Polymerisatpulvern getrocknet werden und so der vorgehend beschriebenen Verkaufsform zur Modifizierung trocken beigemischt werden können. Derartige Trockenzubereitungen sind nach Anmachen mit Wasser unmittelbar gebrauchsfertig (selbstverständlich ist die Gebrauchsform auch dadurch erhältlich, daß man die erfindungsgemäßen Polymerisate unmittelbar als wäßrige Dispersion zusetzt).

Zur Herstellung derartiger Polymerisatpulver können beispielsweise nachfolgende Verfahren angewendet werden:

- Sprühtrocknung der wäßrigen Polymerisatdispersion,
- Gefriertrocknung der wäßrigen Polymerisatdispersion,
- Fällen der Dispersionspolymerisate aus alkalischer Lösung durch Alkanolzusatz,
- Herstellen der erfindungsgemäßen Polymerisate nach der Methode der radikalischen Suspensionspolymerisation und anschließendes Mahlen.

Als besonders zweckmäßig erweist sich die Methode der Sprühtrocknung, wobei an sich bekannte Antiback- und Sprühhilfsmittel mitverwendet werden können. Von besonderem Vorteil ist jedoch, daß die erfindungsgemäßen wäßrigen Polymerisatdispersionen nach der Methode der EP-A 262 326 bzw. EP-A 332 067 auch ohne Mitverwendung von Sprühhilfsmitteln als in alkalischem Medium redispergierbare Polymerisate erhältlich sind. Selbstverständlich können die erfindungsgemäßen Polymerisate saure Funktionen aufweisende Monomere (z.B. die Monomeren b) in neutralisierter Form (z.B. mit Alkalimetallhydroxid oder Ammoniak bzw. Aminen) einpolymerisiert enthalten. Die Neutralisation kann z.B. unmittelbar vor Sprühtrocknung erfolgen. Die sauren Monomeren b, c können aber auch bereits in neutralisierter Form zur Polymerisation eingesetzt werden.Bevorzugt sind jedoch Polymerisate, die höchstens bis zu 10 Mol-% der sauren Monomeren b, c in neutralisierter Form enthalten.

Bemerkenswerterweise entfalten die erfindungsgemäßen wäßrigen Emulsionspolymerisate ihre erfindungsgemäße Wirkung in der Regel bereits in Einsatzmengen von 0,25 bis 10 Gew.-%, bezogen auf das Gewicht des mineralischen Bindemittels.

Wie bereits erwähnt, eignen sich die erfindungsgemäßen Erzeugnisse insbesondere zur Herstellung selbstverlaufender Ausgleichsmassen auf der Grundlage mineralischer Bindemittel. Deren Trockenzusammensetzung gestaltet sich in der Regel wie folgt:

- 20 bis 50, vorzugsweise 20 bis 40 Gew.-% mineralisches Bindemittel (vorzugsweise ausschließlich Zement),
- 0,2 bis 3, vorzugsweise 0,5 bis 1,5 Gew.-% erfindungsgemäßes Polymerisat,
- bezogen auf das mineralische Bindemittel 0 bis 25 Gew.-% an sich übliche Hilfsmittel (z.B. Entschaumer oder die Oberfläche glättende Mittel wie $CaCO_3$),
- als Restmenge Sand.

Die Körnung des Sandes liegt je nach vorgesehener Auftragsstärke der Ausgleichsmasse üblicherweise im Bereich von 0,05 mm bis 3 mm.

Das Anmachen mit Wasser erfolgt bei diesen Ausgleichsmassen in der Regel mit einem Gewichtsverhältnis von Wasser zu mineralischem Bindemittel von 0,3 bis 0,8, vorzugsweise von 0,4 bis 0,6.

Selbstverständlich entfalten die erfindungsgemäßen Polymerisate ihre vorteilhafte Wirkung auch in solchen mineralischen Bindebaustoffen, die zusätzlich mit anderen Polymeren modifiziert sind.

Beispiele

1. Herstellung wäßriger Polymerisatdispersionen Da bis De

Da:    Ein Gemisch bestehend aus

220 g Wasser,

0,5 g einer 28 gew.-%igen wäßrigen Lösung des Natriumsalzes eines Gemisches aus Schwefelsäurehalbestern von ethoxylierten $C_{12}$-/$C_{14}$-Fettalkoholen (EO-Grad: 2,8) = Emulgatorlösung i,

0,3 g Mohrsches Salz und

20 g Zulauf I

wurde auf 85°C erhitzt und unter Aufrechterhaltung der 85°C zeitgleich beginnend während 2 h mit der Restmenge des Zulauf I und dazu synchron mit Zulauf II kontinuierlich versetzt. Anschließend wurde noch 1 h bei 85°C gerührt.

Zulauf I: 3 g Natriumperoxidisulfat in 100 g Wasser;

Zulauf II: 240 g Methylmethacrlyat,

60 g Methacrylsäure,

7,5 g Ethylhexylthioglykolat,

15,6 g Emulgatorlösung i und

391 g Wasser.

Der K-Wert des resultierenden Emulsionspolymerisats betrug 26,3.

Db:    Wie Da, anstelle der 7,5 g Ethylhexylthioglykolat wurden jedoch 0,24 g tert.-Dodecylmercaptan eingesetzt. Der K-Wert des resultierenden Emulsionspolymerisats betrug 61,5.

Dc:    Wie Da, anstelle der 60 g Methacrylsäure wurden jedoch 60 g Acrylsäure verwendet. Der K-Wert des resultierenden Emulsionspolymerisats betrug 23.

Dd:    Wie Da, die Monomerenzusammensetzung lautete jedoch 95 Gew.-% Methylmethacrylat und 5 Gew.-% Methacrylsäure. Der K-Wert des resultierenden Emulsionspolymerisats betrug 21.

De:    Wie Da, die Monomerenzusammensetzung lautete jedoch 70 Gew.-% Methylmethacrylat und 30 Gew.-% Methacrylsäure. Der K-Wert des resultierenden Emulsionspolymerisats betrug 26,5.

2. Herstellung von selbstverlaufenden Ausgleichsmassen

Ein Gemisch bestehend aus

40 g Quarzsand F 35 (durchschnittliche Körnung 0,2 mm)

35 g Portlandzement PZ 35 F

5 g einer der Dispersionen Da bis De und

15 g Wasser

wurde miteinander zu einer selbstverlaufenden Ausgleichsmasse verrührt. Unmittelbar nach dem Anmachen wurde von den Massen als Maß für ihr Fließverhalten ihr Ausbreitmaß gemäß DIN 1060 von 1982 ermittelt. Die Ergebnisse zeigt nachfolgende Tabelle. Zum Vergleich zeigt die Tabelle das Ausbreitmaß einer entsprechenden Zubereitung, die keinen Polymerisatzusatz enthält (DO).

Tabelle

| Verwendete Dispersionen | Ausbreitmaß |
|---|---|
| DO | 120 mm |
| Da | 230 mm |
| Db | 126 mm |
| Dc | 110 mm |
| Dd | 140 mm |
| De | 160 mm |

Die erfindungsgemäße Zubereitung (Verwendung von Da) wies eine erhöhte Fließfähigkeit auf, bei gleichzeitig homogenem Aufbau der verfestigten Masse.

**Patentansprüche**

1. Wäßrige Polymerisatdispersionen, dadurch erhältlich, daß man ein Monomerengemisch der Zusammensetzung

    70 bis 85 Gew.-% wenigstens eines Monomeren aus der Gruppe umfassend Styrol, Vinyltoluole, Nitrile von 3 bis 6 C-Atome aufweisenden $\alpha,\beta$-monoethylenisch ungesättigten Carbonsäuren und Ester aus 3 bis 6 C-Atome aufweisenden $\alpha,\beta$-monoethylenisch ungesättigten Carbonsäuren und 1 bis 12 C-Atome aufweisenden Alkanolen (Monomere a),

    15 bis 25 Gew.-% wenigstens einer 3 bis 6 C-Atome aufweisenden $\alpha,\beta$-monoethylenisch ungesättigten Carbonsäure und/oder deren Amiden (Monomere b) und

    0 bis 5 Gew.-% sonstige copolymerisierbare Monomere (Monomere c)

    nach der Methode der radikalischen wäßrigen Emulsionspolymerisation mit der Maßgabe polymerisiert, daß

    - die Monomeren b, bezogen auf ihre Gesamtmenge, wenigstens 50 Gew.-% Methacrylsäure umfassen,
    - die Zusammensetzung der insgesamt eingesetzten Monomeren a, b und c so gewählt wird, daß nach der Beziehung von Fox für ein aus diesen Monomeren aufgebautes Emulsionspolymerisat eine Glasübergangstemperatur von 80 bis 160 °C resultiert und
    - der K-Wert des resultierenden Emulsionspolymerisats, bestimmt in seiner vollsauren Form in Dimethylformamid bei 23 °C und einem Emulsionspolymerisatgehalt von 0,1 Gew.-%, 15 bis 40 beträgt.

2. Wäßrige Polymerisatdispersionen nach Anspruch 1, deren Emulsionspolymerisat saure Funktionen aufweisende Monomere b und/oder c in neutralisierter Form enthält.

3. Polymerisatpulver, deren Polymerisat in polymerisierter Form aus

    70 bis 85 Gew.-% wenigstens eines Monomeren aus der Gruppe umfassend Styrol, Vinyltoluole, Nitrile von 3 bis 6 C-Atome aufweisenden $\alpha,\beta$-monoethylenisch ungesättigten Carbonsäuren und Ester aus 3 bis 6 C-Atome aufweisenden $\alpha,\beta$-monoethylenisch ungesättigten Carbonsäuren und 1 bis 12 C-Atome aufweisenden Alkanolen (Monomere a),

    15 bis 25 Gew.-% wenigstens einer 3 bis 6 C-Atome aufweisenden $\alpha,\beta$-monoethylenisch ungesättigten Carbonsäure und/oder deren Amiden (Monomere b) und

    0 bis 5 Gew.-% sonstigen copolymerisierbaren Monomeren (Monomere c)

    mit der Maßgabe aufgebaut ist, daß

    - die Monomeren b, bezogen auf ihre Gesamtmenge, wenigstens 50 Gew.-% Methacrylsäure umfassen,
    - die Zusammensetzung der Monomeren a, b und c so gewählt ist, daß nach der Beziehung von Fox für ein aus diesen Monomeren aufgebautes Polymerisat eine Glasübergangstemperatur von 80 bis 160 °C resultiert und
    - der K-Wert des Polymerisats, bestimmt in vollsaurer Form des Polymerisats in Dimethylformamid bei 23 °C und einem Polymerisatgehalt von 0,1 Gew.-%, 15 bis 40 beträgt.

**4.** Polymerisatpulver nach Anspruch 3, deren Polymerisat saure Funktionen aufweisende Monomere b und/oder c in neutralisierter Form enthält.

**5.** Verfahren zur Herstellung wäßriger Polymerisatdispersionen gemäß Anspruch 1 oder 2, dadurch gekennzeichnet, daß man die zu polymerisierenden Monomeren unter Mitverwendung von das Molekulargewicht regelnden Substanzen nach der Methode der radikalischen wäßrigen Emulsionspolymerisation polymerisiert.

**6.** Verfahren zur Herstellung von Polymerisatpulvern gemäß Anspruch 3 oder 4, dadurch gekennzeichnet, daß man gemäß Anspruch 5 verfährt und die dabei resultierende wäßrige Polymerisatdispersion anschließend trocknet.

**7.** Mineralische Bindebaustoffe auf der Basis von Zement enthaltenden mineralischen Bindemitteln, enthaltend als Additiv eine wäßrige Polymerisatdispersion gemäß den Ansprüchen 1 oder 2 in wäßriger oder getrockneter Form.

**8.** Mineralische Bindebaustoffe auf der Basis von Zement enthaltenden mineralischen Bindemitteln, enthaltend als Additiv ein Polymerisatpulver gemäß den Ansprüchen 3 oder 4.

**9.** Verwendung wäßriger Polymerisatdispersionen gemäß Anspruch 1 oder 2 als Additiv in mineralischen Bindebaustoffen auf der Grundlage von Zement enthaltenden mineralischen Bindemitteln.

**10.** Verwendung von Polymerisatpulvern gemäß Anspruch 3 oder 4 als Additiv in mineralischen Bindebaustoffen auf der Grundlage von Zement enthaltenden mineralischen Bindemitteln.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 043 911 (BASF) --- | | C08F220/12 C08F246/00 C04B24/26 |
| A | FR-A-2 377 426 (PRODUITS CHIMIQUES UGINE KUHLMANN) --- | | |
| D,A | EP-A-0 262 326 (ROHM GMBH) ----- | | |

| | |
|---|---|
| | **RECHERCHIERTE SACHGEBIETE (Int.Cl.5)** |
| | C08F |

Der vorliegende Recherchenbericht wurde für alle Patentansprüche erstellt

| Recherchenort | Abschlußdatum der Recherche | Prüfer |
|---|---|---|
| DEN HAAG | 24. August 1994 | Cauwenberg, C |

EPO FORM 1503 03.82 (P04C03)